# EUROPEAN PATENT SPECIFICATION

(11) **EP 3 758 502 B1**
(45) Date of publication and mention of the grant of the patent: **25.09.2024**
(21) Application number: 19703456.4
(22) Date of filing: 11.01.2019
(51) Int. Cl.: A23G 3/42

(54) **PREBIOTIC GUMMY FOOD PRODUCTS AND METHOD FOR ITS MANUFACTURE**
PRÄBIOTISCHE GUMMIARTIGE NAHRUNGSMITTEL UND VERFAHREN ZU IHRER HERSTELLUNG
PRODUITS ALIMENTAIRES GOMMEUX PRÉBIOTIQUES ET PROCÉDÉ DE LEUR FABRICATION

(30) Priority: 27.02.2018 US 201862635979 P
(43) Date of publication of application: 06.01.2021
(73) Proprietor: CORN Products Development Inc., Westchester, IL 60154 (US)
(72) Inventor: NIETO, Marceliano B., Bridgewater, New Jersey 08807 (US)
(74) Representative: Novagraaf Group
(86) International application number: PCT/US2019/013296
(87) International publication number: WO 2019/168594

(56) References cited:
- EP-A1- 1 629 730
- WO-A1-2009/141074
- WO-A1-2012/071035
- GB-A- 2 430 344
- JP-A- 2003 235 455
- JP-A- 2012 050 349
- US-A- 5 476 678
- US-A1- 2005 089 618
- US-A1- 2006 286 248
- US-A1- 2008 102 166
- US-A1- 2015 282 499

## Description

The present technology relates generally to the field of food products, including prebiotic compositions. In particular, the present technology relates to producing gelatin-free chewable food products, such as gummy, or jelly confectionery products.

Food companies routinely seek ingredients acceptable to consumers who do not eat food products sourced from animals and that improve the wholesomeness of such food products by reducing sugar and fortifying these food products with ingredients perceived by consumers as healthy. Chewable confections, such as gummies or jellies, typically rely on high amounts of gelatin to provide the desired elastic, rubbery texture consumers expect. Commercially available gelatin, however, is generally sourced from animals, which poses challenges for food companies interested in providing gelatin containing gummies or jelly products to consumers who are vegetarian or vegan, or have certain religious dietary restrictions such as kosher and halal. Food companies are, therefore, interested in non-animal derived gelatin alternatives for use in such chewable confections.

Gelling gums such as agar-agar and carrageenan are known replacements for gelatin. However, agar-agar is expensive and subject to regular supply limitations and carrageenan is portrayed negatively for purported inflammatory and possible carcinogenic qualities. Moreover, organic varieties of these alternatives are not readily available. Currently there is no technology to make a chewable confection without using gelling gums such as gelatin, pectin, agar-agar, or carrageenan.

WO 2009/141074 A1 describes gummy candies wherein gelatin is partly or totally replaced by a soluble dietary fibre selected from glucomannan, partly hydrolysed guar gum (PHGG), partly hydrolysed starch or inulin.

US 2005/089618 A1 describes a gelatin-free soft caramel including a soft caramel base mass that contains at least one polysaccharide hydrocolloid as texturing agent, a crystalline sweetener phase formed by isomaltulose, and a noncrystalline sweetener phase, wherein the caramel is gelatin-free.

JP 2003 235455 A describes a dietary fiber-containing gummy candy which comprises one or more kinds of saccharides selected from the group consisting of oligosaccharides and sugar alcohols, a modified starch and the acacia gum.

EP 1 629 730 A1 describes a functional food replacement for sucrose which comprises prebiotic fibres and sweeteners, and possibly other non selective fibres, minerals, vitamins and probiotic strains.

US 2015/282499 A1 describes a jelly confection, and more particularly a chewy sweet or a chewing gum comprising a gelatinising agent providing said sweets. A jelly confection containing little or no gelatin is described.

GB 2 430 344 A describes a confectionery composition comprising a carbohydrate system comprising a non-digestible soluble oligosacoharide, a non-digestible soluble polysaccharide or a combination thereof. The confectionery is described to have a soft chewy texture.

JP 2012 050349 A describes a soft candy including: 70-95 wt.% of carbohydrate and dietary fiber in total at the ratio between 8:2 and 2:8; 1-10 wt.% of pullulan; 0.5-10 wt.% of gellan gum; and 1-10 wt.% of pregelatinized starch derived from dent corn or waxy corn.

WO 2012/071035 A1 describes a jelly confectionery product having 1) an ingredient including fruit juice, fruit puree or a combination thereof, and 2) a jelly blend including a stabilizer and a fiber. The jelly confectionery product can be free of added sugar or corn syrup.

US 2006/286248 A1 describes a reduced carbohydrate ice cream or other frozen dessert product that contains a low-digestible sweetener system and a fermentable fiber material.

US 5476678 A describes a composition for and method of producing a supplemental dietary fiber fortified fructose-based chewy confection which can be stabilized to produce a long textured taffy-like candy or a short textured nougat-like candy.

US 2008/102166 A1 describes a confectionary chew that includes (a) a sweetener and (b) a fiber blend that includes at least 1% by weight short-chain inulin and at least 1% by weight a source of dietary fiber other than short-chain inulin.

The invention provides a confectionery composition as defined in the claims. In some embodiments described herein, the confectionery compositions described herein comprises 50 wt% to 70 wt% of a prebiotic composition

The first prebiotic ingredient comprises gum Arabic, beta-glucan, guar gum, partially hydrolyzed guar gum (PHGG), konjac glucomannan, arabinogalactan, or a mixture of any two or more thereof. In any of the embodiments described herein, the first prebiotic ingredient is gum Arabic, beta-glucan, guar gum, partially hydrolyzed guar gum (PHGG), konjac glucomannan, arabinogalactan, or a mixture of any two or more thereof.

IThe second prebiotic ingredient comprises an oligosaccharide, polysaccharide, glycoprotein, or a mixture of any two or more thereof. In some of the embodiments described herein, the second prebiotic ingredient is an oligosaccharide, polysaccharide, glycoprotein, or a mixture of any two or more thereof. In any embodiment described herein, the second prebiotic ingredient may comprise inulin, polydextrose, fructooligosaccharides, galactooligosaccharides, isomaltooligosaccharides, pectic oligosaccharide, algal oligosacharrides, resistant dextrin, resistant starch, or similar oligosaccharide, or a mixture of any two or more thereof. In other embodiments described herein, the second prebiotic ingredient is inulin, polydextrose, fructooligosaccharides, galactooligosaccharides, isomaltooligosaccharides, pectic oligosaccharide, algal oligosacharrides, resistant dextrin, resistant starch, or similar oligosaccharide, or a mixture of any two or more thereof.

In any embodiment described herein, the confectionery composition may comprise at least 73% by weight of dissolved solids on a dry solids basis. In any embodiment described herein, the confectionery composition may comprise about 74% to about 78% by weight of dissolved solids on a dry solids basis.

The carrier comprises water, fruit juice, vegetable juice, or a mixture of any two or more thereof.

In any of the embodiments described herein, the third ingredient may comprise an additive. In other embodiments described herein, the additive is a sweetener, syrup, anti-fouling agent, nutrient, flavorant, colorant, acid, or combination of any two or more thereof. In any embodiment described herein, the additive may comprises sugar, high fructose corn syrup, tapioca syrup, agave syrup, stevia, sucralose, Acesulfame K, erythritol, sorbitol, maltitol, glycerin, omega-3 fatty acids, coconut oil, calcium, vitamins, amino acids, proteins, natural and artificial flavors and colors, citric acid, malic acid, or mixtures thereof.

In any of the embodiments described herein, the confectionery composition may be a reduced sugar or sugar-free composition. The confectionery composition is a gummy or a jelly.

Yet another embodiment is directed to a method of preparing a gelatin-free confectionery composition, which is a gummy or a jelly, as defined in the claims. In some embodiments described herein, the mixture may be heated to achieve a solids concentration of about 74 wt% to about 78 wt% of dissolved solids on a dry solids basis.

### BRIEF DESCRIPTION OF THE DRAWINGS

Figure 1 illustrates a comparison of the textural attributes of prebiotic gummies prepared using various ingredients, according to the examples.
Figure 3 is a graph illustrating Texture Profile Analysis (TPA) charts for prebiotic gummies according to the examples, measured using the TA.XT.^{plus} Texture Analyzer.

Various embodiments are described hereinafter. It should be noted that the specific embodiments are not intended as an exhaustive description or as a limitation to the broader aspects discussed herein. One aspect described in conjunction with a particular embodiment is not necessarily limited to that embodiment and can be practiced with any other embodiment(s).

As used herein, "about" will be understood by persons of ordinary skill in the art and will vary to some extent depending upon the context in which it is used. If there are uses of the term which are not clear to persons of ordinary skill in the art, given the context in which it is used, "about" will mean up to plus or minus 10% of the particular term.

The use of the terms "a" and "an" and "the" and similar referents in the context of describing the elements (especially in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the embodiments and does not pose a limitation on the scope of the claims unless otherwise stated. No language in the specification should be construed as indicating any non-claimed element as essential.

As used herein, the term "prebiotic" refers to substances that aid digestion by supporting (e.g., stimulating the growth or activity, or both) of the natural gut flora and beneficial bacteria, e.g., probiotic organisms, in humans, which promote digestion and absorption of nutrients into the bloodstream.

As used herein, the term "sugar-free" refers to compositions that are substantially free of sugar. The term "sugar" generally refers to mono-, di- or oligosaccharides which include for example, dextrose, fructose, glucose, galactose, laevulose, lactose, maltose, mannose, ribose, and sucrose.

As used herein, the term "gelatin-free" refers to compositions that includes less than 5 wt% gelatin. The may include, in various embodiments, less than 2 wt% gelatin, less than 1 wt% gelatin, less than 0.5 wt% gelatin, or 0 wt% gelatin. "Gelatin-free" may refer, in some embodiments, to a composition that contain no gelatin.

Described herein are gelatin-free prebiotic confectionery compositions and methods of making such confectionery compositions. The compositions and methods can be effectively used to develop gelatin-free, organic or non-organic, sugar-free or reduced sugar varieties of prebiotic gummies. It has now been found that the use of prebiotic ingredients provides chewable confectionery compositions with the desired textural properties even without the use of gelatin or gelling gums such as agar, pectin, gellan, and carrageenan.

The prebiotic composition comprises an amount of from about 40 wt% to about 70 wt% of the composition. For example, the prebiotic composition may be present in an amount of 43 wt% to about 70 wt% of the composition. In yet other embodiments, the prebiotic composition comprises an amount of 45 wt% to about 70 wt% of the composition. In still other embodiments, the prebiotic composition comprises an amount of 50 wt% to about 70 wt% of the composition. In still other embodiments, the prebiotic composition comprises an amount up to about 65 wt%, or up to about 67 wt%.

As noted above, the prebiotic composition described herein includes a first prebiotic ingredient. The first prebiotic ingredient in the compositions described herein include gum Arabic, beta-glucan, partially hydrolyzed guar gum (PHGG), konjac glucomannan, arabinogalactan, or a mixture of any two or more thereof. In any of the compositions described herein containing a first prebiotic ingredient, the first prebiotic ingredient may comprise gum Arabic, or may consist of gum Arabic. The gum Arabic may be in any known form. In some embodiments, the first prebiotic ingredient is spray dried gum Arabic.

In some embodiments, the first prebiotic ingredient is present in an amount of from about 15 wt% to about 60 wt%, about 20 wt% to about 50 wt%, about 24 wt% to about 45 wt%, or about 30 wt% to about 40 wt% of the composition, or in ranges of amounts within any of the foregoing ranges. In one embodiment, the first prebiotic ingredient is present in an amount of from about 24 wt% to 45 wt% of the composition.

As noted above, the prebiotic composition described herein comprises a second prebiotic ingredient. The second prebiotic ingredient comprises an oligosaccharide, polysaccharide, glycoprotein, or a mixture of any two or more thereof. In other embodiments, the second prebiotic ingredient comprises inulin, polydextrose, fructooligosaccharides, galactooligosaccharides, isomaltooligosaccharides, pectic oligosaccharides, algal oligosacharrides, resistant dextrin, resistant starch, or a mixture of any two or more thereof.

The second prebiotic ingredient may be present in the composition in an amount of about 10 wt% to about 35 wt%, about 12 wt% to about 30 wt%, about 16 wt% to about 25 wt%, or about 18 wt% to about 22 wt% of the composition, or in ranges of amounts within any of the foregoing ranges. In one embodiment, the second prebiotic ingredient is present in an amount of from about 15 wt% to 30 wt% of the composition.

In yet further embodiments, the ratio of the first prebiotic ingredient to the second prebiotic ingredient is from about 80:20 to about 20:80 by weight. For example, the ratio of the first prebiotic ingredient to the second prebiotic ingredient may be about 70:30, about 65:35, about 60:40, about 65:45, about 50:50, about 40:60, about 35:65, about 30:70 by weight, or any range between and including any two of the foregoing ratios. In some embodiments, the ratio of the first prebiotic ingredient to the second prebiotic ingredient is 60:40. In other embodiments, the ratio of the first prebiotic ingredient to the second prebiotic ingredient is 42:58.

As noted above, the confectionery composition described herein includes a third ingredient comprising a carrier and, optionally, additives. The carrier includes water, fruit juice, vegetable juice, other fluids and liquids, or mixtures thereof. In some embodiments, the carrier includes water. In other embodiments, the third ingredient includes an additive, such as for example, a sweetener, syrup, anti-fouling agent, food grade anti-foaming agent, anti-sticking wax, nutrient, flavorant, colorant, an acid, or a mixture of any two or more thereof. Non-limiting examples of sweeteners includes natural or artificial sweeteners such as sugar, glucose, fructose, erythritol, high fructose corn syrup (HFCS), sucrose, stevia, agave syrup, and mixtures thereof. Non-limiting examples of nutrients may include, but are not limited to, omega-3 fatty acids, calcium, vitamins, amino acids, proteins, and mixtures thereof. Non-limiting examples of the additive may include sugar, high fructose corn syrup, tapioca syrup, agave syrup, stevia, sucralose, Acesulfame K, erythritol, sorbitol, maltitol, glycerin, omega-3 fatty acids, coconut oil, calcium, vitamins, amino acids, or proteins, natural and artificial flavors and colors, citric acid, malic acid, and mixtures thereof. Suitable anti-sticking agents are known in the art and may be included in the compositions to make them easier to form into discrete shapes and prevent them from sticking together when packaged.

The third ingredient, or ingredients, is present in an amount of from about 60 wt% to about 30 wt% of the composition. In yet further embodiments, the third ingredient is present in an amount up to about 50 wt%, up to about 55 wt%, up to about 60 wt%, or up to about 65 wt% of the composition. In yet other embodiments, the third ingredient comprises a carrier in an amount of from about 20 wt% to about 50 wt%, about 25 wt% to about 40 wt%, or about 30 wt% to about 35 wt% , wherein the balance of the third ingredient is an additive.

The confectionery compositions provided herein may optionally include a variety of additional food grade synthetic and natural additives and components. The particular additives and components used will depend on the nature of the desired end product. Illustrative additives include other saccharides, oligosaccharides, carbohydrates such as dextrose and hydrolyzed starch, taste-improving compositions, natural or synthetic high-intensity sweeteners, antioxidants, inorganic salt, organic acid, inorganic acid, preservatives, emulsifiers, stabilizers, polyols, protein or amino acid component, bulking agents, minerals and vitamins, food grade anti-foaming agent, wax, fats and oil, and the like and combinations thereof. These additives, if present, can be incorporated in the confectionery composition at about 0.001 wt%, about 0.01 wt%, about 0.02 wt%, about 0.05 wt%, about 0.1 wt%, about 0.5 wt%, about 1.0 wt%, about 2 wt%, about 5 wt%, about 10.0 wt%, and ranges within any of the foregoing ranges.

In some embodiments, the confectionery composition described herein comprises a concentration of at least 73 wt% dissolved solids on a dry solids basis. In other embodiments, the confectionery composition comprises a concentration of at least 74 wt% dissolved solids on a dry solids basis. In still other embodiments, the confectionery composition comprises a concentration of about 70 to about 80 %, about 73 to about 79 %, about 74 to about 78 %, about 75 to about 77 %, or about 75.5 to about 76.5 % by weight of dissolved solids on a dry solids basis. In yet other embodiments, the confectionery composition comprises a concentration of about 74% to about 78 % by weight of dissolved solids on a dry solids basis.

In still further embodiments, the confectionery composition described herein comprises a water content of about 5 wt% to about 40 wt%, about 10 wt% to about 30 wt%, or about 15 wt% to about 20 wt% of the composition. In some embodiments, the confectionery composition described herein comprises a water content of about 16 wt% to about 20 wt% of the composition.

The confectionery composition described herein is gelatin-free. For example, the confectionery composition may not contain gelatin or gelling gums such as agar, pectin, gellan, carrageenan, or mixtures thereof. In yet other embodiments, the confectionery composition described herein does not contain agar. In still other embodiments, the confectionery composition described herein does not contain pectin. In still yet even other embodiments, the confectionery composition described herein does not contain gellan. In even further embodiments, the confectionery composition does not contain carrageenan. In still further embodiments, the confectionery composition is a reduced sugar or sugar-free composition. In certain embodiments, the gummies are made more appealing for consumption by the addition of natural or artificial sweeteners and flavors. The confectionery composition may be in any desired shape, size or form. In further embodiments, the confectionery composition described herein is a chewable confectionery. In yet additional embodiments, the confectionery composition described herein is a gummy orjelly.

The method described herein is comprises blending a first prebiotic ingredient with a second prebiotic ingredient to provide a prebiotic composition. In some embodiments, the method described herein is directed to blending a first prebiotic ingredient in an amount of from about 24 wt% to 45 wt% of the composition with a second prebiotic ingredient in an amount of from about 15 wt% to 30 wt% of the composition to provide a prebiotic composition. Some embodiments the method described herein is directed to blending a 60:40 ratio of a first prebiotic ingredient with a second prebiotic ingredient.

As noted above, the method includes dissolving the prebiotic composition in an aqueous solvent. In some embodiments an additive, such as for example, a sweetener, syrup, anti-fouling agent, food grade anti-foaming agent, wax, fats and oil, nutrient, flavorant, colorant, an acid, or a mixture of any two or more thereof is added.

In some embodiments additives used in the method described herein may be added to the composition at any stage of the method, such as before or after heating the mixture. For example, additives such as sweeteners, syrups and anti-fouling agents may be added to the dissolved mixture of prebiotic composition and the third ingredient prior to heating, whereas additives such as nutrients, non-nutritive sweeteners, flavorants, colorants, and acids may be added after heating the mixture. In any embodiments, the method includes dissolving the prebiotic composition in an aqueous solvent at a concentration of about 40 wt% by weight or more a sweetener, syrup and an anti-fouling agent, to form a mixture.

In yet other embodiments, the method described herein includes heating the mixture to achieve a solids concentration of at least 73 wt% dissolved solids on a dry solids basis. In still other embodiments, the method described herein includes heating the mixture to achieve a solids concentration of about 74 wt% to about 78 wt% of dissolved solids on a dry solids basis.

In some embodiments, the heated mixture of the gelatin-free confectionery composition described herein may be sized into any suitable shape or size as desired depending on the final application and use. For example, the heated mixture may be sized by using common techniques such as molding, extruding, dicing, sheeting, slicing, or a combination of any two or more thereof. In some embodiments, the method described herein may include depositing or pouring the heated mixture into molds of a desired size and shape. In still other embodiments, the method described herein may include molding the heated mixture into a desired size and shape. In stile yet other embodiments, the method described herein may include cooling the heated mixture and cutting or forming it into the desired size and shape.

As noted above, the method includes curing the molded composition to solidify the composition to a pliable, soft-chew composition. In some embodiments, the curing is conducted under suitable conditions of relative humidity, curing time and temperature to obtain the desired texture. In some embodiments, the curing time varies from about 60 minutes to about 60 hours. For example, the composition may be cured for about 1 hour to about 50 hours, about 6 hours to about 48 hours, about 12 hours to about 45 hours, about 20 hours to about 40 hours, or about 25 hours to about 30 hours, or ranges within any of the foregoing ranges. In some embodiments, the composition is cured for about 24 hours to about 48 hours.

In some embodiments, the curing temperature is from about 20 °C to 45 °C. e.g., from about 20 °C to about 42 °C, about 25 °C to about 40 °C, about 28 °C to about 38 °C, or about 30 °C to about 35 °C, or ranges within any of the foregoing ranges.

In some embodiments, the curing is conducted at about 0% to about 50% relative humidity. In other embodiments, the relative humidity for curing is from about 0% to about 40%, about 10% to about 30%, or about 20% to about 25%. In some embodiments, the relative humidity for curing is from about 10% to about 30%.

The curing equipment and conditions may be selected so as to obtain a specific moisture or water content in the end product. In some embodiments, the method described herein includes curing the composition to a water content of about 5 wt% to about 40 wt%, about 10 wt% to about 30 wt%, or about 15 wt% to about 20 wt% of the total weight of the composition. In further embodiments, the method described herein includes curing the composition to a water content of about 16 wt% to about 20 wt% of the total weight of the composition.

In other embodiments, the method described herein includes curing the composition for about 24 hours to about 48 hours at about 10% to about 30% relative humidity to a water content of about 16 wt% to about 20 wt%.

In some embodiments, the method described herein further includes treating the dried composition with an edible wax to prevent sticking and to improve appearance. The treatment may include polishing or coating the compositions with edible wax compositions. Non-limiting examples of edible wax may include beeswax, candelilla wax, carnauba wax, spermaceti wax, and combinations thereof. In some embodiments, the edible wax further includes an additive such as an emulsifier, a colorant, a flavorant, or a mixture of any two or more thereof.

In some embodiments, the method described herein further includes packaging the confectionery composition using suitable packaging methods known in the art using suitable packaging materials. In yet other embodiments, the packaged confectionery composition is stored or transported for sale.

In some embodiments, the method described herein is used to provide a gelatin-free, reduced sugar or sugar-free prebiotic confectionery composition such as a gummy ora jelly. In still other embodiments, the confectionery compositions and methods described herein provide gelatin-free, reduced sugar or sugar-free prebiotic compositions having improved texture, integrity, aesthetic appearance and shelf-life.

The present technology, thus generally described, will be understood more readily by reference to the following examples, which are provided by way of illustration and are not intended to be limiting of the present invention. The examples are intended to illustrate the various embodiments of the present technology.

### EXAMPLES

The present technology is further illustrated by the following examples, which should not be construed as limiting in any way.

### Example 1

### Preparation of Confectionery Samples

In accordance with the present technology, various confectionery samples were prepared. Examples of five compositions produced by these methods are shown in Samples 1-5. Sample 1 utilizes organic ingredients.

A confectionery composition sample in accordance with the present technology may be generally prepared by blending the first and second prebiotic ingredients and further mixing these blended ingredients with water, sweetener and syrup to form a solution. This mixture is then heated to achieve the desired concentration of solids, generally 73% to 78%, before additives such as a nutrient, a non-nutritive sweetener, a flavorant, a colorant, and acid are added and mixed. The resulting mixture is deposited in molds and cured for about 24 h to about 48 h at about 10% to about 30% relative humidity to a water content of about 16% to about 20%.

### Sample 1: Gelatin-free, organic, reduced sugar or sugar-free prebiotic gummy

A gelatin-free, organic, reduced sugar or sugar-free prebiotic gummy was prepared utilizing the ingredients set forth in Table 1.

**Table 1**

| | 1000 g Batch | |
|---|---|---|
| ***Mix the following components 15 minutes and heat-reduce to 76% solids**:* | wt% | Batch Weight, g |
| Water | 36.05 | 360.5 |
| Organic Gum Arabic Spray Dry:Organic Agave Inulin (60:40 ratio) | 47.6 | 476 |
| Sweetener: Organic Erythritol, Organic Sugar or Organic Agave Syrup | 15 | 150 |

| ***Add the following components and mold:*** | - | - |
|---|---|---|
| Natural Color | 0.10 | 1 |
| Flavor (Lemon, Orange, Fruit Punch, other) | 0.20 | 2 |
| Citric Acid, 50% | 1.00 | 10 |
| OG Stevia | 0.05 | 0.5 |
| Monk Fruit Concentrate | 0.06 | 0.6 |
| TOTAL | 100 | 1000 |

A 476 g dry blend of organic gum Arabic spray dry and organic agave inulin (60:40 ratio) was dissolved in 360.5 g water along with150 g sweetener such as organic erythritol, organic sugar or organic agave syrup. The resulting solution was mixed for 15 minutes and heated at 105 °C to 115 °C for 15 to 30 minutes to reduce the concentration of solids to 76%. After heating, the remaining ingredients were added to the mixture. The mixture was then completely mixed and deposited in silicon fruit-shaped molds, cooled to set for 2-4 hours at room temperature and unmolded. The unmolded confections were then cured at 30°C and about 10% to about 30% relative humidity for 12-24 hours to achieve a gummy product with the desired water content of ~18% or total solids of 82°Brix and a chewy, elastic texture. A confectionery composition was also prepared using a 38:62 ratio of organic gum Arabic to organic agave inulin.

The additional Sample 2-5 confectionery compositions that follow were prepared in accordance with the method described hereinabove.

### Sample 2: Gelatin-free, reduced sugar prebiotic gummy

| | 1000 g Batch | |
|---|---|---|
| ***Mix the following components 15 minutes and heat-reduce to 76% solids:*** | % | Batch Weight, g |
| Water | 31.35 | 313.5 |
| Gum Arabic Spray Dry: Polydextrose (60:40 ratio) | 50.6 | 506 |
| Sugar | 15 | 150 |
| Coconut Oil | 2 | 20 |

| ***Add the following components and mold:*** | - | - |
|---|---|---|
| Natural Color | 0.10 | 1 |
| Flavor (Lemon, Orange, Fruit Punch, other) | 0.20 | 2 |
| Citric Acid, 50% Solution | 0.75 | 7.5 |
| TOTAL | 100 | 1000 |

### Sample 3: Gelatin-free, No Added Sugar prebiotic gummy

| | 1000 g Batch | |
|---|---|---|
| ***Mix the following components 15 minutes and heat-reduce to 76% solids:*** | % | Batch Weight, g |
| Water | 33 | 330 |
| Organic Gum Arabic | 27.36 | 273.6 |
| Organic Agave Inulin | 18.24 | 182.4 |
| GOS (Bioligo GL 5700 IMF, Ingredion) | 20 | 200 |

| ***Add the following components and mold:*** | - | - |
|---|---|---|
| Natural Color | 0.10 | 1 |
| Flavor (Lemon, Orange, Fruit Punch, other) | 0.20 | 2 |
| Citric Acid, 50% | 1.00 | 10 |
| Sucralose | 0.10 | 1 |
| TOTAL | 100.00 | 1000.00 |

### Sample 4: Gelatin-free, reduced sugar prebiotic gummy

| | 1000 g Batch | |
|---|---|---|
| ***Mix the following components 15 minutes and heat-reduce to 76% solids:*** | % | Batch Weight, g |
| Water | 31.09 | 310.9 |
| Arab Spray Dry: FOS Nutra Flora (60:40) | 50.6 | 606 |
| Sugar | 15 | 150 |
| Sodium Citrate | 2 | 20 |

| ***Add the following components and mold**:* | - | - |
|---|---|---|
| Natural Color | 0.10 | 1 |
| Flavor (Lemon, Orange, Fruit Punch, other) | 0.20 | 2 |
| Citric Acid, 50% | 1.00 | 10 |
| Sucralose | 0.01 | 0.1 |
| TOTAL | 100 | 1000 |

### Sample 5: Gelatin-free, reduced sugar prebiotic gummy

| | 1000 g Batch | |
|---|---|---|
| ***Mix the following components 15 minutes and heat-reduce to 76% solids:*** | % | Batch Weight, g |
| Water | 33.19 | 331.9 |
| Arabic Spray Dry: Resistant Dextrin Nutriose (60:40 ratio) | 47.5 | 475 |
| Sugar | 15 | 150 |
| Sodium Citrate | 2 | 20 |
| Glycerin | 0.5 | 5 |

| ***Add the following components and mold:*** | **-** | **-** |
|---|---|---|
| Natural Color | 0.10 | 1 |
| Flavor (Lemon, Orange, Fruit Punch, other) | 0.20 | 2 |
| Citric Acid, 50% | 1.5 | 15 |
| Sucralose | 0.01 | 0.1 |
| TOTAL | 100 | 1000 |

### Example 2

### Preparation of Control Composition

**Sample A:** A control confectionery composition sample was prepared in the same manner as Sample 1 with 67 g gelatin 250 Bloom instead of the organic gum Arabic spray dry and organic agave inulin blend and 280 g of sugar and 450 g of 42 DE corn syrup.

**Sample B:** A commercial pectin containing gummy (Fiber Choice Fruity Bites, Prestige Brands Company, Canada).

### Example 3

### Sensory Testing

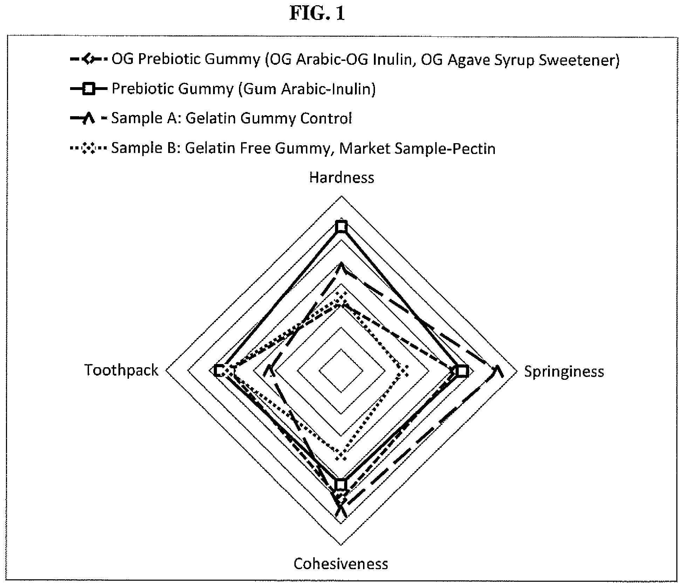

Sensory testing of confectionery composition Samples 1-5 prepared above in Example 1 and control Samples A and B of Example 2 was performed to evaluate textural attributes such as hardness, springiness, cohesiveness, and toothpack. As seen from Figure 1, the sensory tests show that in comparison to the pectin gummy the prebiotic gummies described herein have a much improved cohesiveness and springiness that is closer to the gelatin control as well as much better textural attributes.

### Example 4

### Textural Analysis

Textural analysis of the Sample A and 1-5 confectionery compositions prepared in Examples 1 and 2 was performed using a TA.XT Texture Analyzer from Texture Technologies (Hamilton, Mass.). Gummy samples having dimensions of 2.5 cm x 7.5 cm x 0.7 cm were stretched to a maximum distance of 60 mm and maximum tensile force was measured at break point; distance of ~60 mm means the sample did not break. The firmness and resilience of the gel structure of each of the Sample A and 1-5 confectionery compositionswere also compared . The results of this extensibility analysis are summarized in Table 2

**Table 2**

| **Samples** | **Max. Tensile Force Average (kg)** | **Distance at Max. Tensile Force (mm)** |
|---|---|---|
| A | 1.14 | 59.99 |
| 3 | 1.00 | 60.00 |
| 1 | 1.21 | 51.57 |
| 4 | 0.83 | 56.90 |
| 2 | 3.03 | 59.71 |
| 5 | 2.45 | 60.00 |

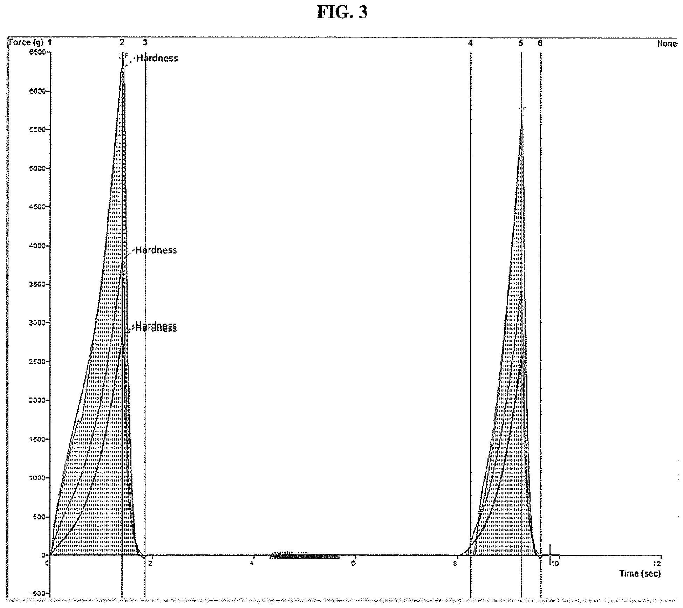

Textural Profile Analysis (TPA) for the confectionery samples was also performed using a TA.XT Texture Analyzer. Various textural parameters such as hardness, fracturability, adhesiveness, springiness, cohesiveness, gumminess, chewiness, and resilience are calculated for each of the samples. The objective and quantified results for the textural parameters are summarized in Table 3 and shown in Figure 3. The samples exhibited desired textural properties, maintained their integrity, showed no fracture and were minimally affected during compression.

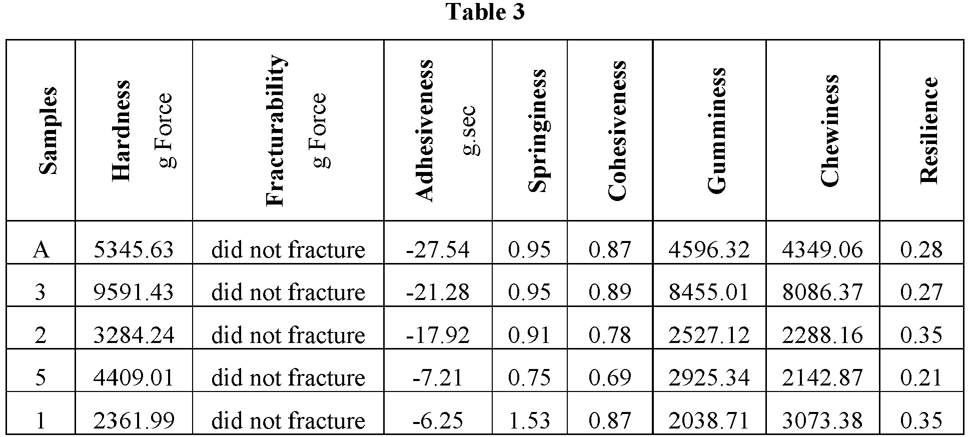

While certain embodiments have been illustrated and described, it should be understood that changes and modifications can be made therein in accordance with ordinary skill in the art without departing from the technology in its broader aspects as defined in the following claims.

The embodiments, illustratively described herein may suitably be practiced in the absence of any element or elements, limitation or limitations, not specifically disclosed herein. Thus, for example, the terms "comprising," "including," "containing," etc. shall be read expansively and without limitation. Additionally, the terms and expressions employed herein have been used as terms of description and not of limitation, and there is no intention in the use of such terms and expressions of excluding any equivalents of the features shown and described or portions thereof, but it is recognized that various modifications are possible within the scope of the claimed technology. Additionally, the phrase "consisting essentially of" will be understood to include those elements specifically recited and those additional elements that do not materially affect the basic and novel characteristics of the claimed technology. The phrase "consisting of" excludes any element not specified.

## Claims

1. A confectionery composition, which is a gummy or jelly, consisting of:
(i) 40 wt% to 70 wt% of a prebiotic composition comprising a first prebiotic ingredient and a second prebiotic ingredient different from the first prebiotic ingredient; and
(ii) 60 wt% to 30 wt% of a third ingredient comprising a carrier and, optionally, additives
wherein the confectionery composition is gelatin-free;
wherein the first prebiotic ingredient comprises gum Arabic, beta-glucan, guar gum, partially hydrolyzed guar gum (PHGG), konjac glucomannan, arabinogalactan, or a mixture of any two or more thereof;
wherein the second prebiotic ingredient comprises an oligosaccharide, polysaccharide, glycoprotein, or a mixture of any two or more thereof; and
wherein the carrier comprises water, fruit juice, vegetable juice, or a mixture of any two or more thereof.

2. The confectionery composition of Claim 1, wherein said composition comprises 50 wt% to 70 wt% of the prebiotic composition.

3. The confectionery composition of any preceding claim, wherein the second prebiotic ingredient is inulin, polydextrose, fructooligosaccharides, galactooligosaccharides, isomaltooligosaccharides, pectic oligosaccharides, algal oligosacharrides, resistant dextrin, resistant starch, or a mixture of any two or more thereof.

4. The confectionery composition of any preceding claim, wherein said composition comprises at least 73 wt% of dissolved solids on a dry-solids basis.

5. The confectionery composition of any preceding claim 1, wherein said composition comprises 74 wt% to 78 wt% of dissolved solids on a dry solids basis.

6. The confectionery composition of any preceding claim, wherein the third ingredient comprises an additive, wherein said additive is a sweetener, syrup, maltodextrin, anti-fouling agent, anti-foaming agent, nutrient, flavorant, colorant, acid, or a mixture of any two or more thereof.

7. The confectionery composition of Claim 6, wherein the additive comprises sugar, high fructose corn syrup, tapioca syrup, agave syrup, stevia, sucralose, Acesulfame K, erythritol, sorbitol, maltitol, maltodextrin (DE 10 to 15), glycerin, omega-3 fatty acids, coconut oil, food grade silicon anti-foam emulsions, calcium, vitamins, amino acids, or proteins, natural and artificial flavors and colors, citric acid, malic acid, or a mixture of any two or more thereof.

8. The confectionery composition of any preceding claim, wherein said composition is a reduced sugar or sugar-free composition.

9. A method of preparing a gelatin-free confectionery composition, which is a gummy or jelly, the method comprising:
blending a first prebiotic ingredient with a second prebiotic ingredient to provide a prebiotic composition;
dissolving the prebiotic composition in an aqueous solvent at a concentration of 40 wt% or more and optionally adding a sweetener, syrup, an anti-foaming agent, an anti-fouling agent or any two or more thereof, to form a mixture;
heating the mixture to achieve a solids concentration of at least 73 wt% dissolved solids on a dry solids basis;
adding a nutrient, a non-nutritive sweetener, a flavorant, a colorant, an acid, or a mixture of any two or more thereof;
molding the heated mixture; and
curing the molded composition to a water content of 16% to 20%,
wherein the first prebiotic ingredient is gum Arabic, beta-glucan, guar gum, partially hydrolyzed guar gum (PHGG), konjac glucomannan, arabinogalactan or a mixture of any two or more thereof.; and wherein the second prebiotic ingredient comprises oligosaccharide, polysaccharide, glycoprotein or a mixture of any two or more thereof.

10. The method of claim 9, further comprising treating the dried composition with an edible wax.

11. The method of Claim 9, wherein the second prebiotic ingredient is inulin, polydextrose, fructooligosaccharides, galactooligosaccharides, isomaltooligosaccharides, pectic oligosaccharide, algal oligosacharrides, resistant dextrin, resistant starch, or a mixture any two or more thereof.

12. The method of any one of claims 9 to 11, wherein the solids concentration is 74 wt% to 78 wt% of dissolved solids on a dry solids basis.

13. The method of any one of claims 9-12, wherein curing the molded composition is for 24 hours to 48 hours at 10% to 30% relative humidity.

## Patentansprüche

1. Süßwarenzusammensetzung, die ein Gummidrops oder Gelee ist, bestehend aus:
(i) zu 40 Gew.-% bis 70 Gew.-% einer präbiotischen Zusammensetzung, umfassend einen ersten präbiotischen Inhaltsstoff und einen zweiten präbiotischen Inhaltsstoff, der sich vom ersten präbiotischen Inhaltsstoff unterscheidet; und
(ii) zu 60 Gew.-% bis 30 Gew.-% einem dritten Inhaltsstoff, umfassend einen Träger und optional Zusatzstoffe
wobei die Süßwarenzusammensetzung gelatinefrei ist;
wobei der erste präbiotische Inhaltsstoff Gummi arabicum, Beta-Glukan, Guarkernmehl, teilweise hydrolysiertes Guarkernmehl (PHGG), Konjak-Glukomannan, Arabinogalaktan oder eine Mischung aus beliebigen zwei oder mehreren davon umfasst;
wobei der zweite präbiotische Inhaltsstoff ein Oligosaccharid, Polysaccharid, Glykoprotein oder eine Mischung aus beliebigen zwei oder mehreren davon umfasst; und
wobei der Träger Wasser, Fruchtsaft, Gemüsesaft oder eine Mischung aus beliebigen zwei oder mehreren davon umfasst.

2. Süßwarenzusammensetzung nach Anspruch 1, wobei die Zusammensetzung zu 50 Gew.-% bis 70 Gew.-% die präbiotische Zusammensetzung umfasst.

3. Süßwarenzusammensetzung nach einem der vorstehenden Ansprüche, wobei der zweite präbiotische Inhaltsstoff Inulin, Polydextrose, Fruktooligosaccharide, Galaktooligosaccharide, Isomaltooligosaccharide, Pektin-Oligosaccharide, Algen-Oligosaccharide, resistentes Dextrin, resistente Stärke oder eine Mischung aus beliebigen zwei oder mehreren davon ist.

4. Süßwarenzusammensetzung nach einem der vorstehenden Ansprüche, wobei die Zusammensetzung zu mindestens 73 Gew.-% gelöste Feststoffe auf einer Trockenfeststoffbasis umfasst.

5. Süßwarenzusammensetzung nach einem der vorstehenden Ansprüche 1, wobei die Zusammensetzung zu 74 Gew.-% bis 78 Gew.-% gelöste Feststoffe auf einer Trockenfeststoffbasis umfasst.

6. Süßwarenzusammensetzung nach einem der vorstehenden Ansprüche, wobei der dritte Inhaltsstoff einen Zusatzstoff umfasst, wobei der Zusatzstoff ein Süßstoff, Sirup, Maltodextrin, Antifoulingmittel, Antischaummittel, Nährstoff, Geschmacksstoff, Farbstoff, Säure oder eine Mischung aus beliebigen zwei oder mehreren davon ist.

7. Süßwarenzusammensetzung nach Anspruch 6, wobei der Zusatzstoff Zucker, Maissirup mit hohem Fruktosegehalt, Tapiokasirup, Agavensirup, Stevia, Sucralose, Acesulfam K, Erythrit, Sorbit, Maltit, Maltodextrin (DE 10 bis 15), Glycerin, Omega-3-Fettsäuren, Kokosnussöl, Silikon-Antischaumemulsionen in Lebensmittelqualität, Kalzium, Vitamine, Aminosäuren oder Proteine, natürliche und künstliche Geschmacksmittel und Farben, Zitronensäure, Apfelsäure oder eine Mischung aus beliebigen zwei oder mehreren davon umfasst.

8. Süßwarenzusammensetzung nach einem der vorstehenden Ansprüche, wobei die Zusammensetzung eine Zusammensetzung mit reduziertem Zuckergehalt oder ohne Zucker ist.

9. Verfahren zum Herstellen einer gelatinefreien Süßwarenzusammensetzung, die ein Gummidrops oder Gelee ist, das Verfahren umfassend:
Mischen eines ersten präbiotischen Inhaltsstoffs mit einem zweiten präbiotischen Inhaltsstoff, um eine präbiotische Zusammensetzung bereitzustellen;
Auflösen der präbiotischen Zusammensetzung in einem wässrigen Lösungsmittel in einer Konzentration von 40 Gew.-% oder mehr und optional Hinzufügen eines Süßstoffs, Sirups, eines Antischaummittels, eines Antifoulingmittels oder beliebiger zwei oder mehrerer davon, um eine Mischung auszubilden;
Erhitzen der Mischung, um eine Feststoffkonzentration von mindestens 73 Gew.-% gelösten Feststoffen auf einer Trockenfeststoffbasis zu erreichen;
Hinzufügen eines Nährstoffs, eines nicht nahrhaften Süßstoffs, eines Geschmacksstoffs, eines Farbstoffs, einer Säure oder einer Mischung aus beliebigen zwei oder mehreren davon;
Formen der erhitzten Mischung; und
Aushärten der geformten Zusammensetzung auf einen Wassergehalt von 16 % bis 20 %,
wobei der erste präbiotische Inhaltsstoff Gummi arabicum, Beta-Glukan, Guarkernmehl, teilweise hydrolysiertes Guarkernmehl (PHGG), Konjak-Glukomannan, Arabinogalaktan oder eine Mischung aus beliebigen zwei oder mehreren davon ist; und wobei der zweite präbiotische Inhaltsstoff Oligosaccharide, Polysaccharide, Glykoprotein oder eine Mischung aus beliebigen zwei oder mehr davon umfasst.

10. Verfahren nach Anspruch 9, ferner umfassend ein Behandeln der getrockneten Zusammensetzung mit einem essbaren Wachs.

11. Verfahren nach Anspruch 9, wobei der zweite präbiotische Inhaltsstoff Inulin, Polydextrose, Fruktooligosaccharide, Galaktooligosaccharide, Isomaltooligosaccharide, Pektin-Oligosaccharide, Algen-Oligosaccharide, resistentes Dextrin, resistente Stärke oder eine Mischung aus beliebigen zwei oder mehreren davon ist.

12. Verfahren nach einem der Ansprüche 9 bis 11, wobei die Feststoffkonzentration zu 74 Gew.-% bis 78 Gew.-% gelöste Feststoffe auf einer Trockenfeststoffbasis ist.

13. Verfahren nach einem der Ansprüche 9 bis 12, wobei das Aushärten der geformten Zusammensetzung 24 Stunden bis 48 Stunden lang bei 10 % bis 30 % relativer Feuchtigkeit erfolgt.

## Revendications

1. Composition de confiserie, qui est une gomme ou une gelée, constituée par :
(i) 40 % en poids à 70 % en poids d'une composition prébiotique comprenant un premier ingrédient prébiotique et un deuxième ingrédient prébiotique différent du premier ingrédient prébiotique ; et
(ii) 60 % en poids à 30 % en poids d'un troisième ingrédient comprenant un support et, éventuellement, des additifs
dans laquelle la composition de confiserie est exempte de gélatine ;
dans laquelle le premier ingrédient prébiotique comprend de la gomme arabique, bêta-glucane, gomme de guar, gomme de guar partiellement hydrolysée (PHGG), glucomannane de konjac, arabinogalactane ou un mélange de deux ou plusieurs quelconques de ceux-ci ;
dans laquelle le deuxième ingrédient prébiotique comprend un oligosaccharide, polysaccharide, glycoprotéine ou un mélange de deux ou plusieurs quelconques de ceux-ci ; et
dans laquelle le support comprend de l'eau, jus de fruits, jus de légumes ou un mélange de deux ou plusieurs quelconques de ceux-ci.

2. Composition de confiserie selon la revendication 1, dans laquelle ladite composition comprend 50 % en poids à 70 % en poids de la composition prébiotique.

3. Composition de confiserie selon une quelconque revendication précédente, dans laquelle le deuxième ingrédient prébiotique est l'inuline, polydextrose, les fructo-oligosaccharides, galacto-oligosaccharides, isomalto-oligosaccharides, oligosaccharides pectiques, oligosacharrides d'algues, dextrine résistante, amidon résistant, ou un mélange de deux ou plusieurs quelconques de ceux-ci.

4. Composition de confiserie selon une quelconque revendication précédente, dans laquelle ladite composition comprend au moins 73 % en poids de solides dissous sur une base de solides secs.

5. Composition de confiserie selon une quelconque revendication précédente 1, dans laquelle ladite composition comprend 74 % en poids à 78 % en poids de solides dissous sur une base de solides secs.

6. Composition de confiserie selon une quelconque revendication précédente, dans laquelle le troisième ingrédient comprend un additif, dans laquelle ledit additif est un édulcorant, sirop, maltodextrine, agent antisalissure, agent antimousse, nutriment, arôme, colorant, acide, ou un mélange de deux ou plusieurs quelconques de ceux-ci.

7. Composition de confiserie selon la revendication 6, dans laquelle l'additif comprend du sucre, sirop de maïs à haute teneur en fructose, sirop de tapioca, sirop d'agave, stévia, sucralose, acésulfame K, érythritol, sorbitol, maltitol, maltodextrine (DE 10 à 15), glycérine, acides gras oméga-3, huile de coco, émulsions anti-mousse de silicone de qualité alimentaire, calcium, vitamines, acides aminés, ou protéines, arômes et couleurs naturels et artificiels, acide citrique, acide malique, ou un mélange de deux ou plusieurs quelconques de ceux-ci.

8. Composition de confiserie selon une quelconque revendication précédente, dans laquelle ladite composition est une composition à teneur réduite en sucre ou exempte de sucre.

9. Procédé de préparation d'une composition de confiserie exempte de gélatine, laquelle composition est une gomme ou une gelée, le procédé comprenant :
le mélange d'un premier ingrédient prébiotique avec un deuxième ingrédient prébiotique pour obtenir une composition prébiotique ;
la dissolution de la composition prébiotique dans un solvant aqueux à une concentration de 40 % en poids ou plus et, éventuellement, l'ajout d'un édulcorant, sirop, agent anti-mousse, agent antisalissure ou de deux ou plus quelconques de ceux-ci, pour former un mélange ;
le chauffage du mélange pour obtenir une concentration en solides d'au moins 73 % en poids de solides dissous sur une base de solides secs ;
l'ajout d'un nutriment, édulcorant non nutritif, arôme, colorant, acide ou d'un mélange de deux ou plusieurs quelconques de ceux-ci ;
le moulage du mélange chauffé ; et
le durcissement de la composition moulée à une teneur en eau allant de 16 à 20 %,
dans lequel le premier ingrédient prébiotique est la gomme arabique, bêta-glucane, gomme de guar, gomme de guar partiellement hydrolysée (PHGG), glucomannane de konjac, arabinogalactane ou un mélange de deux ou plusieurs quelconques de ceux-ci ; et dans lequel le deuxième ingrédient prébiotique comprend un oligosaccharide, polysaccharide, glycoprotéine ou un mélange de deux ou plusieurs quelconques de ceux-ci.

10. Procédé selon la revendication 9, comprenant en outre le traitement de la composition séchée avec une cire comestible.

11. Procédé selon la revendication 9, dans lequel le deuxième ingrédient prébiotique est l'inuline, polydextrose, fructo-oligosaccharides, galacto-oligosaccharides, isomalto-oligosaccharides, oligosaccharide pectique, oligosacharrides d'algues, dextrine résistante, amidon résistant, ou un mélange de deux ou plusieurs quelconques de ceux-ci.

12. Procédé selon l'une quelconque des revendications 9 à 11, dans lequel la concentration en solides va de 74 % en poids à 78 % en poids de solides dissous sur une base de solides secs.

13. Procédé selon l'une quelconque des revendications 9 à 12, dans lequel le durcissement de la composition moulée dure de 24 à 48 heures à une humidité relative de 10 % à 30 %.
